Europäisches Patentamt

European Patent Office

Office européen des brevets

(11) Publication number: **0 293 661 B1**

(12) EUROPEAN PATENT SPECIFICATION

(45) Date of publication of patent specification: **05.08.92** (51) Int. Cl.5: **C03B 9/38**, C03B 11/12

(21) Application number: **88107855.4**

(22) Date of filing: **17.05.88**

(54) A mould assembly for a cyclicly operable machine for forming glass articles.

(30) Priority: **02.06.87 IT 6747487**

(43) Date of publication of application:
**07.12.88 Bulletin 88/49**

(45) Publication of the grant of the patent:
**05.08.92 Bulletin 92/32**

(84) Designated Contracting States:
**AT BE CH DE ES FR GB GR LI LU NL SE**

(56) References cited:
**EP-A- 0 192 384**
**GB-A- 2 152 493**
**GB-A- 2 154 229**
**US-A- 4 251 253**

(73) Proprietor: **BOTTERO S.p.A.**
**Via Genova, 82**
**I-12010 Roata Canale (Cuneo)(IT)**

(72) Inventor: **Ghinamo, Leonardo**
**Via Cuneo 37**
**I-12012 BOVES(IT)**

(74) Representative: **Bongiovanni, Guido et al**
**STUDIO TORTA Società Semplice Via Viotti 9**
**I-10121 Torino(IT)**

Rank Xerox (UK) Business Services

## Description

The present invention relates to a mould assembly for a cyclicly operable machine for forming glass articles, comprising at least one mould forming a cavity for the said articles and provided with at least one base a surface of which defines one part of the surface of the said cavity and at least two mould side walls each of which defines another part of the surface of this cavity.

In mould assemblies of this type, one of which is described in EP-A1-0 192 384, each of the said side walls is movable from a first position in which it is in contact with the base to define the cavity, to a second position in which it is displaced radially with respect to the axis of the base to allow removal of the article from the cavity itself. Each side wall is movable on a plate from the first to the second previously defined position, and is provided with at least one series of cooling air channels disposed longitudinally of the wall itself and each of which is in communication with a corresponding hole formed in the said plate, which, in turn, opens into a plenum chamber into which compressed air is supplied to maintain the chamber itself under substantially constant pressure.

In assemblies of this type, when the side walls of the mould are located in the first position, air from the plenum chamber flows through the holes in the plate and from these through the cooling air channels in such a way as to flow over the surface of the channels themselves and, therefore, carry away thermal energy from the said walls.

Mould assemblies of this type have various disadvantages.

First of all, the air flow through the plenum chamber and from this through the holes in the plate and the cooling air channels formed in the lateral walls of the mould is not regular, but gives rise to vortex motion because of the sharp variations in cross-section in the passage from the plenum chamber to the said channels, with the disadvantage of giving rise to high resistance to the flow of air and, therefore, to significant energy losses in the movement of the air, and to a low efficiency of the cooling system.

Moreover, the cooling action is poor not only because of the above mentioned disadvantage, but also because of the low speed of movement in the plenum chamber and, above all, in the cooling channels formed in the interior of the mould side walls.

Further, even if the air supplied to the said cooling channels exerts a moderate cooling action on the walls themselves, it is not able to exert any effective cooling action on the base of the mould, in which the highest temperatures are usually reached, because of the smallness of its surfaces which are exposed to the air during the operating cycle of the machine.

Finally, moulding assemblies of this type have a rather large bulk which makes their use in particular applications rather problematical; in fact, the said plenum chamber which is disposed immediately beneath the moulds themselves, because of the large cross-sections of the air passages which are required in it, gives rise to a very high volume which is located in the region where other members and parts of the machine must be housed; therefore, to allow such housing there are sometimes required structurally complex arrangements in general of rather large dimensions.

The object of the present invention is that of providing a mould assembly for a cyclicly operable machine for forming glass articles of the type which has been briefly described, which will be free from the disadvantages which have been indicated above.

In US-A-4 251 253 there is described a mould assembly of another type in which the air is supplied to the cooling air channels provided on the side walls of the mould via two different ducts, one of which is formed in the base and the other is generated by deformable fed conduits separated from the mould. The mould assemblies of this type are complex and not fully reliable.

The above object of the present invention is attained by a mould assembly for a cyclicly operating machine for forming glass articles, comprising at least one forming mould defining a cavity for the said articles and provided with at least one base a surface of which defines a part of the surface of the said cavity and at least two mould side walls each of which defines another part of the said surface of the cavity, each of the said side walls being movable from a first position in which it is in contact with the said base to define the said cavity to a second position in which it is displaced radially with respect to the axis of the said base to allow the said article to be removed from the said cavity, each of the said side walls being provided with at least one series of cooling channels disposed longitudinally of the wall and adapted to be traversed by cooling air supplied by a source of compressed air via an air supply duct, characterised by the fact that said supply duct includes an intermediate supply duct portion, which defines an annular air path in which the air moves substantially radially with respect to the axis of the mould and into which opens at least one of the said cooling channels, said intermediate supply duct portion being substantially defined by means of a first and a second air guide surface which are apt to impart a substantially radial direction thereto, and which are formed respectively by annular grooves on the inside of each of the said mould side walls and in the outside surface of said base, each of the said guide surfaces being a surface of revolution obtained by rotating a curved directrix line about the axis of the mould, the said curved directrix line comprising at least one point of reverse curvature and the cross-sectional areas of the passages along the said intermediate supply duct portion, measured perpendicularly to the flow of air along the sections of the portion being substantially equal and being equal to the overall cross-sectional area of the said cooling channels formed in the said mould side walls.

For a better understanding of the invention a more detailed description of it will now be given, by way of example, with reference to the attached drawings, in which:

Figure 1 is a vertical section through the mould assembly of the invention;

Figure 2 is a section, on an enlarged scale, of a mould assembly in the closed position;

Figure 3 shows the mould of Figure 2 in the open position;

Figure 4 is a plan view from above of the assembly;

Figure 5 is a section through a part of the assembly of Figure 1, taken on the line V-V; and

Figure 6 is a perspective view of a constructional detail of the part of the assembly which has been shown in Figure 5.

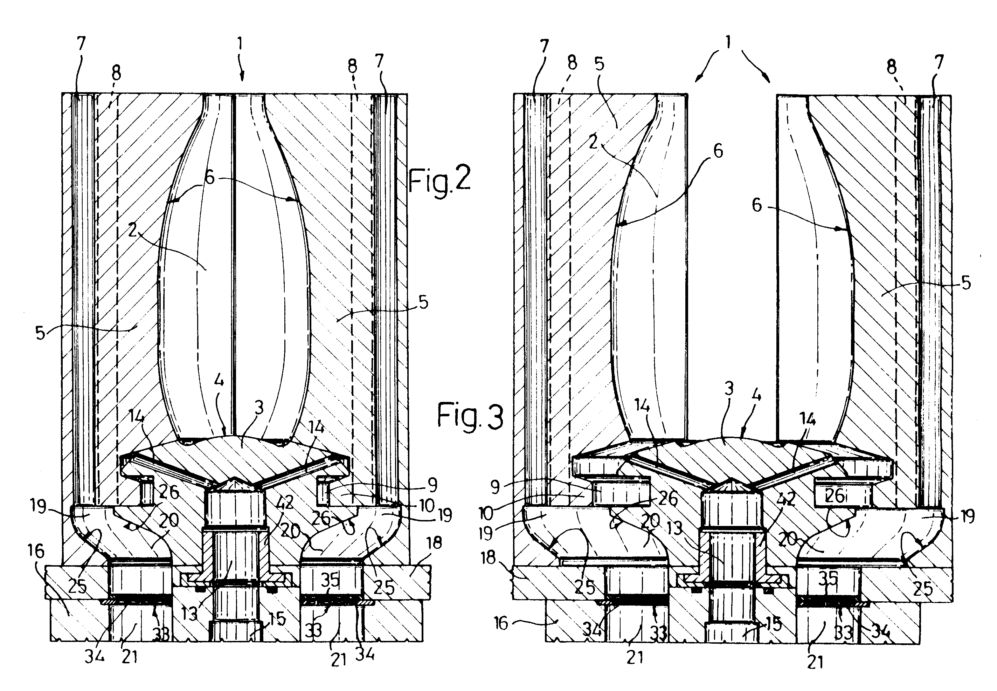

The mould assembly of the invention is adapted to be utilised on a cyclicly operable machine for forming glass articles and comprises a plurality of forming moulds 1, each of which defines a cavity 2 for an article, for example, as in the case illustrated in the drawings, for a bottle. Each mould substantially comprises a base 3 one surface 4 of which defines a part of the surface of the cavity 2, and at least two mould side walls 5, each of which is provided with a surface 6 which defines another part of the surface of the cavity; each of these side walls is movable from a first position, shown in Figure 2, in which it is in contact with the base 3 to define the cavity 2, to a second position, shown in Figure 3, in which it is displaced radially with respect to the axis of the base to allow the article to be removed from the cavity.

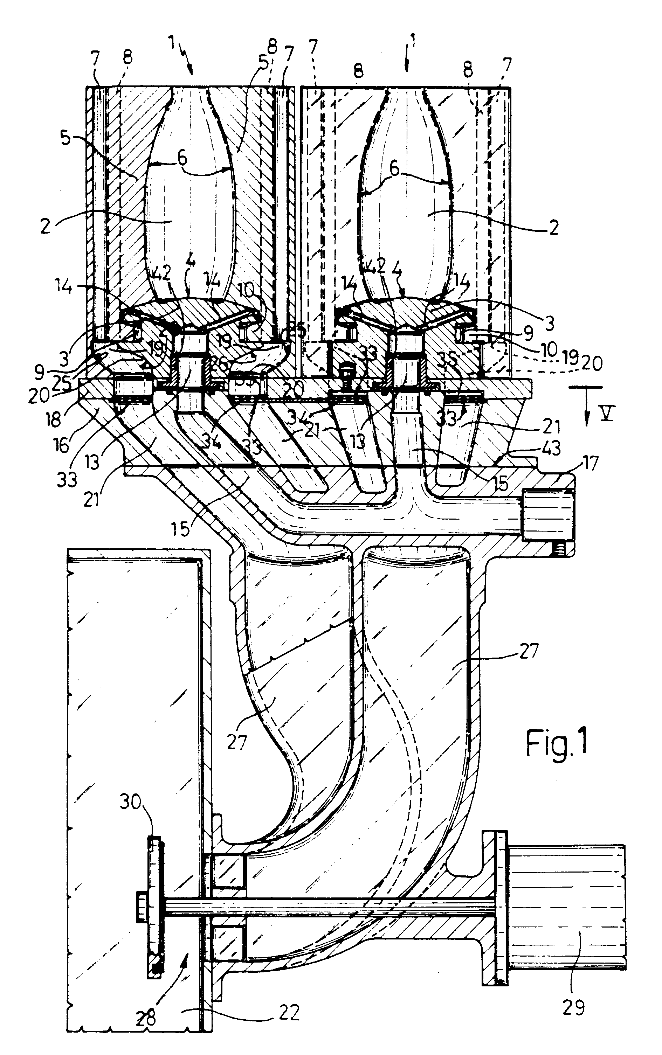

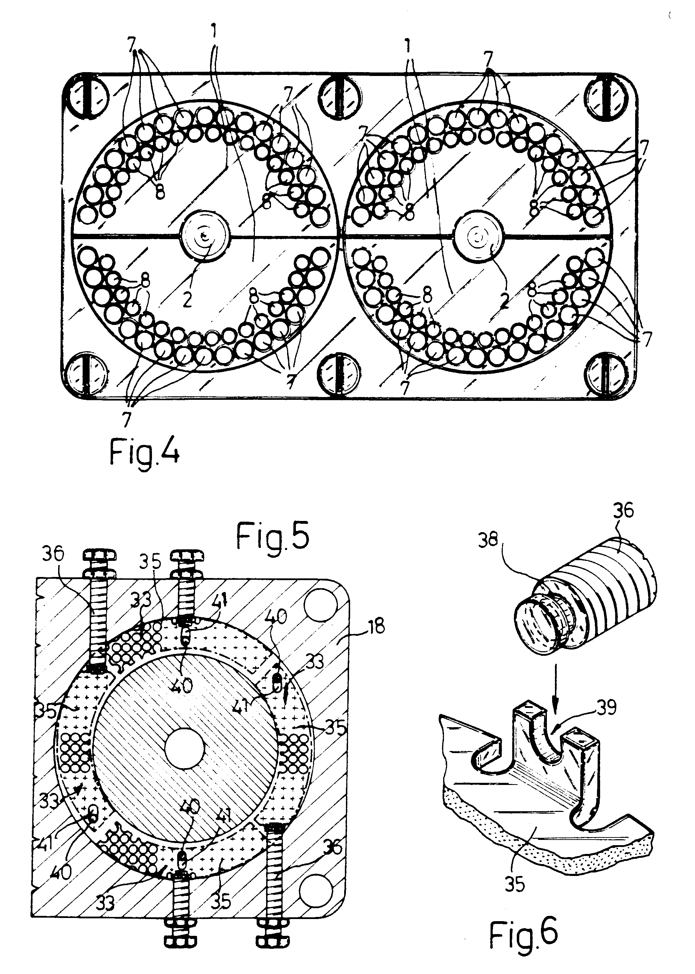

Each of the mould side walls 5 is provided with at least one series of cooling channels 7, 8 disposed longitudinally of the wall to be traversed by cooling air: in the case of the embodiment illustrated, as is clearly seen in Figure 4, there are provided two series of such channels the axes of which are disposed on two cylindrical concentric surfaces. The base 3 has an annular groove 9 into which enter corresponding annular projections 10 of each of the mould side walls 5 when in the closure position of Figure 2. Within the base are formed axial holes 13 in communication with other radial holes 14 of the base itself, which communicate through other passages, not represented in the Figures, with the mould cavity 2; the holes 13, as can be seen in Figure 1, are in communication with air inlet ducts 15 which can be connected with suction means for the purpose of exerting a desired suction within each of the mould cavities 2.

Each mould 1 is supported by a pair of superimposed support elements 16 and 17 and between these and the moulds there is interposed, conveniently, a suitable support plate 18. An intermediate duct 20 is formed between each of the mould side walls 5 and the base 13 (Figures 2 and 3) which intermediate duct defines a first air path having a substantially radial direction with respect to the axis of the mould and into which the cooling channels 7 and 8 open; the intermediate duct 20 is in communication with an air supply duct 21 formed in the support elements 16 and 17 and which connects said intermediate duct with a source 22 of compressed air.

The intermediate duct 20 is formed substantially by means of a first annular groove in each of the mould side walls 5, and a second annular groove formed in the base 3. The first annular groove is substantially provided with a first guide surface 25 (Figure 2) adapted to impart to the air a substantially radial direction: this guide surface 25 is a surface of revolution obtained by rotating a curved directrix line about the axis of the mould; this curved directrix line includes at least one point of contrary curvature as is clearly seen in Figures 2 and 3.

The second groove is provided with a second guide surface 26 adapted to impart a substantially radial direction to the air; this second guide surface, too, is a surface of revolution obtained by development from a curved directrix line which is made to rotate about the axis of the mould and which substantially includes a point of contrary curvature.

As is clearly seen from Figure 2, when the mould is in the closed position the said intermediate duct 20 define a substantially annular air passage having a substantially radial direction which puts the air supply duct 21 into communication with the cooling channels 7 and 8.

As is clearly seen from Figure 1, one part of the air suction duct 15 is housed substantially within a corresponding section 21 of the air supply duct; these two duct sections are substantially coaxial.

Each air supply duct section 21 opens into another suitably shaped duct section 27 which, in turn, is in communication with the source 22 of compressed air and between each of these sections and the source itself there is conveniently arranged an interception valve 28 controlled by an actuator 29 of any type; the shutter member of this valve is constituted , for example, by a valve cap 30.

The cross-sectional areas of the air passages along the intermediate duct sections 20, measured perpendicularly to the flow of air along the sections themselves, are substantially equal and are equal to the overall cross-sectional area of the cooling channels 7 and 8 formed in the mould side walls 5.

Moreover, the cross-sectional areas of the air passages along the duct sections 21 and 27 of the air supply means, measured orthogonally to the flow of air along these, are also substantially constant and are equal to the said cross-sectional areas of the passages along the intermediate duct 20.

In this way, starting from the compressed air source, up to the cooling channels 7 and 8, there is formed for each mould a set of passages for cooling air for the mould itself, having a substantially constant cross-sectional area at any point along the passages themselves, and equal to the overall cross-sectional area of the cooling channels 7 and 8.

In the end part of the air supply duct sections 21, immediately beneath each of the moulds 1, there are arranged air flow throttling means, generally indicated 33, adapted selectively to vary the resistance to the flow of air in predetermined regions of the passage sections; these means conveniently comprise at least two series of superimposed grilles 34 and 35, disposed in such a way that the grille of one of the series is movable with respect to that of the other to vary the cross-sectional area of the air passage through the two series of superimposed grilles. Conveniently a first fixed annular grille 34 supports a plurality of grille sectors 35 (Figure 5) each of which can be made to translate with respect to the fixed grille by means of a corresponding threaded shaft 36 screwed into a corresponding hole of the plate 18 and provided with an annular end groove 38 adapted to cooperate with a corresponding fork 39 formed on a corresponding sector 35; further, each sector 34 can be suitably guided by corresponding pins 40 inserted into slots 41 of the sectors.

Each base 3 can be connected to the support element 16 in any convenient manner utilising, for example, a bush 42; moreover, conveniently, the first air suction duct section 15 and the air supply ducts 21 are made of two separate support elements 16 and 17 joined together along a junction plane 43 (Figure 1).

The operation of the mould assembly described is as follows:
When each mould is in the closed position illustrated in Figure 2 the intermediate duct 20, formed in the mould side walls 5 and in the base 3, define an air passage extending substantially radially which puts the supply ducts 21 into communication with the cooling channels 7 and 8. It is therefore evident that, in these conditions, a substantially laminar air flow is created starting from the compressed air source 22 through the duct sections 26, 21, and 20 because of the constancy of the area of flow cross-section through the ducts themselves and the form of these; in this way the formation of vortex motion is avoided and, therefore, the air moves with low resistance and very high speed; consequently the energy necessary to effect cooling of the mould is very low and the cooling action is effective.

Moreover, because of the presence of the throttling means 33 it is possible, by suitably regulating the position of the grille sectors 35 via the pins 36, to vary the resistance to the flow of air in suitable regions of the ducts for the purpose of obtaining different cooling actions in appropriate parts of the mould.

The said cooling action is effective also on the base 3 since the second guide surface 26 which defines the intermediate duct 20 is formed on the base itself and this surface has a very large area in contact with the air.

During operation of the machine the supply of cooling air is controlled through the valve 28 which is only held open during the part of the cycle in which the moulds are in the closed position.

When, at the end of the forming cycle, the article is discharged from the moulds the side walls 5 are displaced radially with respect to the base 3 to bring them into the open position of Figure 3.

As can be seen in Figure 1, the overall dimensions of the mould of the invention are very reduced, in particular in the region beneath the moulds 1, because of the lack of air reservoirs or plenum chambers of very high volume.

It is evident that the embodiment of the present invention can have modifications and variations introduced thereto both as far as the form and arrangement of the various parts are concerned, without departing from the ambit of the invention.

**Claims**

1. A mould assembly for a cyclicly operating machine for forming glass articles, comprising at least one forming mould (1) defining a cavity (2) for the said articles and provided with at least one base (3) a surface (4) of which defines a part of the surface of the said cavity and at least two mould side walls (5) each of which defines another part of the said surface of the cavity, each of the said side walls being movable from a first position in which it is in contact with the said base to define the said cavity to a second position in which it is displaced radially with respect to the axis of the said base to allow the said article to be removed from the said cavity, each of the said side walls being provided with at least one series of cooling channels (7, 8) disposed longitudinally of the wall and adapted to be traversed by cooling air supplied by a source (22) of compressed air via an air supply duct, characterised by the fact that said supply duct includes an intermediate supply duct portion (20), which defines an annular air path in which the air moves substantially radially with respect to the axis of the mould and into which opens at least one of the said cooling channels, said intermediate supply duct portion (20) being substantially defined by means of a first and a second air guide surface (25, 26) which are apt to impart a substantially radial direction thereto, and which are formed respectively by annular grooves on the inside of each of the said mould side walls and in the outside surface of said base, each of the said guide surfaces being a surface of revolution obtained by rotating a curved directrix line about the axis of the mould, the said curved directrix line comprising at least one point of reverse curvature and the cross-sectional areas of the passages along the said intermediate supply duct portion, measured perpendicularly to the flow of air along the sections of the portion being substantially equal and being equal to the overall cross-sectional area of the said cooling channels formed in the said mould side walls.

2. A mould assembly according to Claim 1, characterised by the fact that the said supply duct comprises a lower supply duct portion (21) which is disposed upstream of said intermediate supply duct portion (20) and has a substantially constant cross-sectional area for the passage of air, measured orthogonally to the flow of air along it.

3. A mould assembly according to Claim 1 or 2, characterised by the fact that along the said supply duct portions (20, 21) there are disposed air flow throttling means (33) operable selectively to vary the resistance to the flow of air in predetermined regions of the passage sections along the said supply ducts.

4. A mould assembly according to Claim 3, characterised by the fact that the said throttling means are disposed between the said intermediate duct portion (20) and the said lower supply duct portion (21).

5. A mould assembly according to Claim 3 or Claim 4, characterised by the fact that the said air flow throttling means comprise at least two series of superimposed grilles (34, 35) the grille of one of the said series (35) being movable with respect to those of the other series (34) in such a way as to be able to vary the cross-sectional area of the air passage through the two series of superimposed grilles.

6. A mould assembly according to any preceding Claim characterised by the fact that each of the said cavities of the mould is in communication through an air inlet duct (15) formed in the said base with suction means operable to suck air from the said cavity, whereby a first section of the said air suction duct originates from the said base and is disposed within a corresponding section of the said lower supply duct portion (21) and is coaxial therewith.

7. A mould assembly according to Claim 5 or Claim 6, characterised by the fact that the said air flow throttling means (33) comprise a first fixed grille (34) of annular form and a plurality of grille sectors (35) superimposed thereon and movable with respect to it by actuating means.

8. A mould assembly according to any preceding Claim, characterised by the fact that between the said compressed air source and the said air supply duct there are disposed valve means (28) operable to regulate the rate of flow of air in the duct itself.

**Revendications**

1. Assemblage de moule pour une machine opérant en cycle pour former des articles en verre, comprenant au moins un moule de formage (1) formant une cavité (2) pour lesdits articles et doté d'au moins une base (3) dont une surface (4) forme une partie de la surface de ladite cavité et au moins deux parois latérales de moule (5) formant chacune une autre partie de ladite surface de la cavité, chacune desdites parois latérales pouvant être déplacée d'une première position dans laquelle elle est en contact avec ladite base pour former ladite cavité à une seconde position dans laquelle elle est déplacée radialement relativement à l'axe de ladite base pour permettre audit article d'être extrait de ladite cavité, chacune desdites parois latérales étant dotée d'au moins une série de canaux de refroidissement (7, 8) disposés longitudinalement par rapport à la paroi et adaptés à être traversés par de l'air de refroidissement fourni par une source (22) d'air comprimé via un conduit de distribution d'air, caractérisé en ce que ledit conduit de distribution comprend une portion de conduit de distribution intermédiaire (20), qui forme un passage d'air annulaire dans lequel l'air se déplace sensiblement radialement par rapport à l'axe du moule et dans lequel s'ouvre au moins un desdits canaux de refroidissement, ladite portion de conduit de distribution intermédiaire (20) étant sensiblement formée au moyen d'une première et d'une seconde surface de guidage d'air (25, 26) qui sont aptes à donner une direction sensiblement radiale à ladite portion, et qui sont formées respectivement par des gorges annulaires sur l'intérieur de chacune desdites parois latérales de moule et dans la surface externe de ladite base, chacune desdites surfaces de guidage étant une surface de révolution obtenue par rotation d'une ligne directrice courbe selon l'axe du moule, ladite ligne directrice courbe comprenant au moins un point de contre-courbure et les superficies de section transversale des passages le long de la portion de conduit de distribution intermédiaire, mesurées perpendiculairement au flux d'air le long des sections de la portion, étant sensiblement les mêmes et étant égales à la superficie de section transversale globale desdits canaux de refroidissement formés dans lesdites parois latérales de moule.

2. Assemblage de moule selon la revendication 1, caractérisé en ce que ledit conduit de distribution comprend une portion de conduit de distribution inférieure (21) qui est disposée en amont de ladite portion de conduit de distribution intermédiaire (20) et a une superficie de section transversale sensiblement constante pour le passage d'air, mesurée orthogonalement au flux d'air le long d'elle.

3. Assemblage de moule selon la revendication 1 ou 2, caractérisé en ce que le long desdites portions de conduit de distribution (20, 21) sont disposés des moyens d'étranglement de flux d'air (33) pouvant être actionnés de manière sélective pour faire varier la résistance au flux d'air dans des zones prédéterminées des sections de passage le long desdits conduits de distribution.

4. Assemblage de moule selon la revendication 3, caractérisé en ce que lesdits moyens d'étranglement sont disposés entre ladite portion de conduit de distribution intermédiaire (20) et ladite portion de conduit de distribution inférieure (21).

5. Assemblage de moule selon la revendication 3 ou 4, caractérisé en ce que lesdits moyens d'étranglement de flux d'air comprennent au moins deux séries de grilles superposées (34, 35), la grille d'une desdites séries (35) étant mobile relativement aux grilles de l'autre série (34) de manière à pouvoir faire varier la superficie de section transversale du passage d'air via les deux séries de grilles superposées.

6. Assemblage de moule selon l'une quelconque des revendications précédentes, caractérisé en ce que chacune desdites cavités du moule est en communication, par l'intermédiaire d'un conduit d'entrée d'air (15) formé dans ladite base, avec un moyen d'aspiration servant à aspirer l'air de ladite cavité, de manière qu'une première section dudit conduit d'aspiration d'air parte de ladite base et soit disposée au sein d'une section correspondante de ladite portion de conduit de distribution inférieure (21) et soit dans le même axe que cette dernière.

7. Assemblage de moule selon la revendication 5 ou 6, caractérisé en ce que lesdits moyens d'étranglement de flux d'air (33) comprennent une première grille fixe (34) de forme annulaire et une pluralité de secteurs de grilles (35) superposés sur la grille fixe et pouvant être déplacés relativement à cette dernière par un moyen d'actionnement.

8. Assemblage de moule selon l'une quelconque des revendications précédentes, caractérisé en ce qu'entre ladite source d'air comprimé et ledit conduit de distribution d'air sont disposées des soupapes (28) servant à réguler le débit d'air dans le conduit même.

**Patentansprüche**

1. Formengarnitur für eine zyklisch arbeitende Maschine zur Erzeugung von Glaswaren mit mindestens einer Form (1), die einen Hohlraum (2) für die Waren begrenzt, und die mit mindestens einer Basis (3), von der eine Oberfläche (4) einen Abschnitt der Oberfläche des Hohlraums begrenzt, und mit mindestens zwei Formseitenwänden (5) versehen ist, von denen beide jeweils einen anderen Abschnitt der besagten Oberfläche des Hohlraums begrenzen, wobei jeder dieser Seitenwände aus einer ersten Position, in der sie in Kontakt mit der besagten Basis steht, um den besagten Hohlraum zu begrenzen, in eine zweite Position bewegbar ist, in der sie radial in Bezug auf die Achse der besagten Basis verschoben ist, um es der besagten Ware zu gestatten, aus dem Hohlraum entfernt zu werden, wobei jede dieser Seitenwände mit mindestens einer Gruppe von Kühlungskanälen (7, 8) versehen ist, die longitudinal entlang der Wand angeordnet und derart angepaßt sind, um durch Kühlluft durchströmt zu werden, die von einer Quelle (22) komprimierter Luft über eine Luftzuführungsleitung zugeführt wird, **dadurch gekennzeichnet,** daß die Luftzuführungsleitung einen Zwischenluftzuführungsleitungsabschnitt (20) aufweist, der einen ringförmigen Luftweg begrenzt, in dem sich die Luft im wesentlichen radial in Bezug auf die Achse der Form bewegt und in den sich mindestens einer der besagten Kühlungskanäle öffnet, wobei der Zwischenluftzuführungsleitungsabschnitt (20) im wesentlichen durch die Mittel einer ersten und einer zweiten Luftführungsoberfläche (25, 26) begrenzt wird, die geeignet sind, eine im wesentlichen radiale Richtung auf diesen zu geben, und die jeweils durch ringförmige Nuten auf der Innenseite von jeder der Formseitenwände und in der äußeren Oberfläche der besagten Basis ausgebildet sind, wobei jede der Führungsflächen eine Rotationsfläche ist, die durch Abrollen einer gekrümmten Leitkurvenlinie um die Achse der Form erhalten wird, wobei die besagte Leitkurvenlinie mindestens einen Punkt umgekehrter Krümmung aufweist und die Querschnittsflächen der Durchführungen entlang des Zwischenluftzuführungsleitungsabschnittes senkrecht zum Luftfluß entlang den Sektionen des Abschnittes im wesentlichen gleich sind, und daß sie gleich zu der Gesamtquerschnittsfläche der besagten Kühlungskanäle sind, die in den besagten Formseitenwänden ausgebildet sind.

2. Formengarnitur nach Anspruch 1, dadurch gekennzeichnet, daß die Zuführungsleitung einen unteren Zuführungsleitungsabschnitt (21) umfaßt, der in Flußrichtung aufwärts des besagten Zwischenluftzuführungsleitungsabschnittes (20) angeordnet ist und eine im wesentliche konstante Querschnittsfläche für den Luftdurchlaß bei rechtwinklig zum Fluß der Luft durch ihn hindurch durchgeführter Messung aufweist.

3. Formengarnitur nach Anspruch 1 oder nach Anspruch 2, dadurch gekennzeichnet, daß Luftflußdrosselungsmittel (33) entlang den Zuführungsleitungsabschnitten (20, 21) angeordnet sind, die selektiv betätigbar sind um den Widerstand gegenüber dem Luftfluß in vorbestimmten Bereichen der Durchlaßsektionen entlang den Zuführungsleitungsabschnitten zu verändern.

4. Formengarnitur nach Anspruch 3, dadurch gekennzeichnet, daß die Luftflußdrosselungsmittel zwischen dem besagten Zwischenzuführungsleitungsabschnitt (20) und dem unteren Zuführungsleitungsabschnitt (21) angeordnet sind.

5. Formengarnitur nach Anspruch 3 oder nach Anspruch 4, dadurch gekennzeichnet, daß die Luftflußdrosselungsmittel mindestens zwei Gruppen von übereinander angeordneten Gittern (34, 35) umfassen, wobei die Gitter einer dieser Gruppen (35) in Bezug auf die Gitter der anderen Gruppe (34) in einer solchen Weise bewegbar sind, um die Querschnittsfläche des Luftdurchlasses durch die beiden Gruppen von übereinander liegenden Gittern zu verändern.

6. Formengarnitur nach einem der vorstehenden Ansprüche, dadurch gekennzeichnet, daß jeder der Hohlräume der Form durch eine Lufteinlaßleitung (15) in Verbindung steht, die in der Basis angeordnet ist und die betätigbare Einsaugmittel aufweist, um Luft aus dem Hohlraum einzusaugen, wobei ein erster Abschnitt der besagten Luftansaugmittel von der besagten Basis ausgeht und innerhalb eines entsprechenden Abschnitts des besagten unteren Zuführungsleitungsabschnittes (21) angeordnet ist und mit diesem koaxial verläuft.

7. Formengarnitur nach Anspruch 5 oder nach Anspruch 6, dadurch gekennzeichnet, daß die Luftflußdrosselungsmittel (33) mindestens ein erstes festes Gitter (34) in Ringform und eine Vielzahl von darauf aufgelegten Gitterabschnitten (35) aufweisen, die relativ und in Bezug zu ersteren durch Betätigungsmittel bewegbar sind.

8. Formengarnitur nach einem der vorstehenden Ansprüche, dadurch gekennzeichnet, daß zwischen der Druckluftquelle und dem Zuführungsleitungsabschnitt betätigbare Klappenmittel (28) angeordnet sind, um die Luftflußrate in der Leitung selbst zu steuern.

Fig.1

Fig.2

Fig.3

Fig.4

Fig.5

Fig.6